# EUROPEAN PATENT APPLICATION

(11) **EP 4 840 903 A1**
(43) Date of publication of application: **18.11.2026**
(21) Application number: 25738860.3
(22) Date of filing: 03.01.2025
(51) Int. Cl.: C08L 25/12, C08L 51/04, C08K 3/22, C08K 3/26

(54) **THERMOPLASTIC RESIN COMPOSITION, METHOD FOR PREPARING SAME, AND MOLDED ARTICLE COMPRISING SAME**

(30) Priority: 11.01.2024 KR 20240004867; 02.01.2025 KR 20250000500
(71) Applicant: LG Chem, Ltd., Seoul 07336 (KR)
(72) Inventor: PARK, Chun Ho, Seoul 07796 (KR); KIM, Seo Hwa, Seoul 07796 (KR); CHO, Yun Kyoung, Seoul 07796 (KR); AN, Yong Hee, Seoul 07796 (KR); KIM, Ho Hoon, Seoul 07796 (KR); JANG, Jeongmin, Seoul 07796 (KR); HWANG, Hyeri, Seoul 07796 (KR)
(74) Representative: Vossius & Partner Patentanwälte Rechtsanwälte mbB
(86) International application number: PCT/KR2025/000087
(87) International publication number: WO 2025/150783

(57) **Abstract**

The present invention relates to a thermoplastic resin composition, a method of preparing the same, and a molded article including the same. More particularly, the present invention relates to a thermoplastic resin composition including 4 to 31 % by weight of an alkyl acrylate-aromatic vinyl compound-vinyl cyanide compound graft copolymer (A-1) containing an alkyl acrylate rubber having an average particle diameter of 50 to 150 nm, 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less, 55 to 77 % by weight of an aromatic vinyl compound-vinyl cyanide compound copolymer (B), 7 to 12.5 % by weight of a white pigment (C); and 3.5 to 8 % by weight of a white pigment auxiliary agent (D) having an average particle size of 2 µm or less, a method of preparing the thermoplastic resin composition, and a molded article including the thermoplastic resin composition.

According to the present invention, the present invention has an effect of providing a thermoplastic resin composition that maintains the excellent physical properties of conventional ASA-based resins, realizes high whiteness even with a reduced input amount of white pigment, has excellent thin film processability, hiding power, and gloss, has excellent appearance quality with no protrusions on the sheet surface, and reduces manufacturing costs, a method of preparing the thermoplastic resin composition, and a molded article including the thermoplastic resin composition.

## Description

### [Technical Field]

### [Cross-Reference to Related Applications]

This application claims priority to Korean Patent Application No. 10-2024-0004867, filed on January 11, 2024, and Korean Patent Application No. 10-2025-0000500, re-filed on January 2, 2025, based on the priority of the above patent, in the Korean Intellectual Property Office, the disclosures of each of which are incorporated herein by reference.

The present invention relates to a thermoplastic resin composition, a method of preparing the same, and a molded article including the same. More particularly, the present invention relates to a thermoplastic resin composition that maintains the excellent physical properties of conventional ASA-based resins, realizes high whiteness even with a significantly reduced amount of white pigment, has excellent thin film processability, hiding power, and gloss, has excellent appearance quality with no protrusions on the sheet surface, and reduces manufacturing costs, a method of preparing the same, and a molded article including the same.

### [Background Art]

Acrylate-styrene-acrylonitrile copolymers (hereinafter referred to as 'ASA resins') have excellent weather resistance, aging resistance, chemical resistance, rigidity, impact resistance, and processability, and are used in a variety of fields such as automobiles, building materials, and miscellaneous goods.

Recently, the main color of decorative sheets for furniture finishing is white, and high whiteness is especially preferred. To implement high whiteness, the amount of expensive TiO₂, a white pigment, added to an ASA resin composition is increased, but beyond a certain amount, the whiteness is only slightly improved even when the TiO₂ content is increased, while the impact strength, durability, and surface quality deteriorate.

Accordingly, there is a need to develop a material that maintains the excellent physical properties of conventional ASA resins, achieves high whiteness required by the market even with a reduced input amount of white pigment, and has excellent thin film processability, hiding power, gloss, and surface quality.

### [Related Art Documents]

### [Patent Documents]

KR 2009-0095764 A

### [Disclosure]

### [Technical Problem]

Therefore, the present invention has been made in view of the above problems, and it is one object of the present invention to provide a thermoplastic resin composition that has the excellent physical properties of conventional ASA-based resins, realizes high whiteness even with a reduced amount of expensive white pigment, has excellent thin film processability, hiding power, and gloss, has excellent appearance quality with no protrusions on the sheet surface, and reduces manufacturing costs.

It is another object of the present invention to provide a method of preparing the thermoplastic resin composition of the present invention.

It is yet another object of the present invention to provide a molded article manufactured using the thermoplastic resin composition of the present invention.

The above and other objects can be accomplished by the present invention described below.

### [Technical Solution]

I) In accordance with one aspect of the present invention, provided is a thermoplastic resin composition including 4 to 31 % by weight of an alkyl acrylate-aromatic vinyl compound-vinyl cyanide compound graft copolymer (A-1) containing an alkyl acrylate rubber having an average particle diameter of 50 to 150 nm; 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less; 55 to 77 % by weight of an aromatic vinyl compound-vinyl cyanide compound copolymer (B); 7 to 12.5 % by weight of a white pigment (C); and 3.5 to 8 % by weight of a white pigment auxiliary agent (D) having an average particle size of 2 µm or less.
II) According to I), the white pigment (C) may include one or more selected from the group consisting of titanium oxide (TiO₂), zinc oxide (ZnO), zinc sulfide (ZnS), lithopone, and white lead (lead oxide).
III) According to I) or II), the white pigment auxiliary agent (D) may include one or more selected from the group consisting of calcium carbonate (CaCO₃), talc, clay, barium sulfate (BaSO₄), aluminum hydroxide (Al(OH)₃), and silicon dioxide (SiO₂).
IV) According to I) to III), the white pigment auxiliary agent (D) may have a refractive index of 1.70 or less.
V) According to I) to IV), a weight ratio (C:D) of the white pigment (C) to the white pigment auxiliary agent (D) may be 1:0.4 to 1:0.7.
VI) According to I) to V), based on a total weight of the graft copolymer (A-1), the graft copolymer (A-1) may include 35 to 65 % by weight of an alkyl acrylate rubber, 20 to 55 % by weight of an aromatic vinyl compound, and 1 to 25 % by weight of a vinyl cyanide compound.
VII) According to I) to VI), based on a total weight of the graft copolymer (A-2), the graft copolymer (A-2) may include 35 to 65 % by weight of an alkyl acrylate rubber, 20 to 55 % by weight of an aromatic vinyl compound, and 1 to 25 % by weight of a vinyl cyanide compound.
VIII) According to I) to VII), the aromatic vinyl compound-vinyl cyanide compound copolymer (B) may include one or more selected from the group consisting of an aromatic vinyl compound-vinyl cyanide compound copolymer (b-1) having a weight average molecular weight of 100,000 to 150,000 g/mol and an aromatic vinyl compound-vinyl cyanide compound copolymer (b-2) having a weight average molecular weight of greater than 150,000 g/mol and 200,000 g/mol or less.
IX) According to I) to VIII), the thermoplastic resin composition may include both the aromatic vinyl compound-vinyl cyanide compound copolymer (b-1) having a weight average molecular weight of 100,000 to 150,000 g/mol and the aromatic vinyl compound-vinyl cyanide compound copolymer (b-2) having a weight average molecular weight of greater than 150,000 g/mol and 200,000 g/mol or less, wherein a weight ratio (b-1:b-2) thereof is 2:8 to 4:6.
X) According to I) to IX), when an "L" value and a "b" value are measured in an SCI mode using a color difference meter and a difference thereof is calculated to obtain whiteness (L value - b value), the thermoplastic resin composition may have a whiteness of 95.5 or more.
XI) According to I) to X), the thermoplastic resin composition may have a gloss of 82 or more as measured at 60° for a sheet having a thickness of 0.15 mm according to ASTM D523.
XII) According to I) to XI), the thermoplastic resin composition may have an Izod impact strength of 5.3 kgf·cm/cm or more as measured for a notched injection-molded specimen (thickness: 1/4") according to ASTM D256.
XIII) In accordance with another aspect of the present invention, provided is a method of preparing a thermoplastic resin composition, the method including kneading and extruding, at 200 to 300 °C and 100 to 500 rpm, 4 to 31 % by weight of an alkyl acrylate-aromatic vinyl compound-vinyl cyanide compound graft copolymer (A-1) containing an alkyl acrylate rubber having an average particle diameter of 50 to 150 nm; 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less; 55 to 77 % by weight of an aromatic vinyl compound-vinyl cyanide compound copolymer (B); 7 to 12.5 % by weight of a white pigment (C); and 3.5 to 8 % by weight of a white pigment auxiliary agent (D) having an average particle size of 2 µm or less.
XIV) In accordance with yet another aspect of the present invention, provided is a molded article including the thermoplastic resin composition according to any one of I) to XII).

### [Advantageous Effects]

According to the present invention, the present invention has an effect of providing a thermoplastic resin composition that has physical properties equal or superior to those of conventional ASA-based resins, realizes high whiteness even with a reduced input amount of white pigment, has excellent thin film processability, hiding power, and gloss, has excellent appearance quality with no protrusions on the sheet surface, and reduces manufacturing costs due to a reduced input amount of white pigment, a method of preparing the same, and a molded article including the same.

### [Best Mode]

Hereinafter, a thermoplastic resin composition of the present invention, a method of preparing the same, and a molded article including the same will be described in detail.

The present inventors confirmed that, when a white pigment and a white pigment auxiliary agent having a predetermined average particle size were added to a base resin consisting of two types of alkyl acrylate-aromatic vinyl compound-vinyl cyan compound graft copolymers containing an alkyl acrylate rubber having a predetermined average particle diameter and an aromatic vinyl compound-vinyl cyanide compound copolymer, excellent physical properties of conventional ASA-based resins were maintained, high whiteness was realized even with a reduced input amount of white pigment, thin film processability, hiding power, and gloss were excellent, and the surface quality was improved because no protrusions occurred on the surface of a molded article. Based on these results, the present inventors conducted further studies to complete the present invention.

The thermoplastic resin composition according to the present invention is described in detail below.

The thermoplastic resin composition of the present invention includes 4 to 31 % by weight of an alkyl acrylate-aromatic vinyl compound-vinyl cyanide compound graft copolymer (A-1) containing an alkyl acrylate rubber having an average particle diameter of 50 to 150 nm; 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less; 55 to 77 % by weight of an aromatic vinyl compound-vinyl cyanide compound copolymer (B); 7 to 12.5 % by weight of a white pigment (C); and 3.5 to 8 % by weight of a white pigment auxiliary agent (D) having an average particle size of 2 µm or less. In this case, the excellent physical properties of conventional ASA-based resins may be maintained, high whiteness may be realized even with a significantly reduced input amount of white pigment, thin film processability, hiding power, and gloss may be excellent, and appearance quality may be excellent because no protrusions occur on the sheet surface.

Hereinafter, each component of the thermoplastic resin composition of the present invention will be described in detail.

### (A-1) Alkyl acrylate-aromatic vinyl compound-vinyl cyanide compound graft copolymer containing an alkyl acrylate rubber having an average particle diameter of 50 to 150 nm

For example, based on a total weight of components (A-1) to (D), the graft copolymer (A-1) may be included in an amount of 4 to 31 % by weight, preferably 5 to 28 % by weight, more preferably 6 to 25 % by weight, still more preferably 6 to 20 % by weight. Within this range, physical properties equal or superior to those of conventional ASA-based resins may be obtained, high whiteness may be achieved even though the input amount of a white pigment is reduced, thin film processability, hiding power, and gloss may be excellent, and appearance quality may be excellent because there are no protrusions on the surface of a molded article.

The alkyl acrylate rubber of the graft copolymer (A-1) may have an average particle diameter of preferably 60 to 140 nm, more preferably 80 to 140 nm, still more preferably 100 to 140 nm, still more preferably 110 to 140 nm. Within this range, impact resistance, gloss, transparency, and colorability may be excellent.

In the present disclosure, the average particle diameter may be measured using the dynamic light scattering method, and more specifically, the average particle diameter means an arithmetic average particle diameter in the particle size distribution measured by the dynamic light scattering method, that is, a scattering intensity average particle diameter. Specifically, the average particle diameter was measured as an intensity value using a Nicomp 380 particle size analyzer (manufacturer: PSS) in a Gaussian mode. As a specific measurement example, a sample was prepared by diluting 0.1 g of latex (total solids content: 35 to 50 wt%) 1,000 to 5,000-fold with distilled water. Then, the average particle diameter of the sample was measured using a flow cell in auto-dilution in a measurement mode of dynamic light scattering/intensity 300 kHz/intensity-weight Gaussian analysis. At this time, setting values were as follows: temperature: 23 °C, measurement wavelength: 632.8 nm, channel width: 10 µsec.

The graft copolymer (A-1) may preferably include an alkyl acrylate rubber (core) and an aromatic vinyl compound-vinyl cyanide compound copolymer (shell) surrounding the alkyl acrylate rubber (core). In this case, gloss, transparency, colorability, and processability may be excellent while maintaining mechanical properties.

For example, based on a total weight thereof, the graft copolymer (A-1) may include 35 to 65 % by weight of an alkyl acrylate rubber, 20 to 55 % by weight of an aromatic vinyl compound, and 1 to 25 % by weight of a vinyl cyanide compound. Within this range, gloss, transparency, colorability, and processability may be excellent while maintaining mechanical properties.

Preferably, the graft copolymer (A-1) may include 40 to 60 % by weight of an alkyl acrylate rubber, 25 to 50 % by weight of an aromatic vinyl compound, and 5 to 20 % by weight of a vinyl cyanide compound. Within this range, gloss, transparency, colorability, and processability may be excellent while maintaining mechanical properties.

More preferably, the graft copolymer (A-1) may include 45 to 55 % by weight of an alkyl acrylate rubber, 33 to 43 % by weight of an aromatic vinyl compound, and 10 to 15 % by weight of a vinyl cyanide compound. Within this range, gloss, transparency, colorability, and processability may be excellent while maintaining mechanical properties.

For example, the graft copolymer (A-1) may be prepared by emulsion polymerization. In this case, gloss, transparency, and colorability may be excellent while maintaining mechanical properties.

The emulsion polymerization may be performed using an emulsion polymerization method, e.g., an emulsion graft polymerization method, commonly practiced in the art to which the present invention pertains, without particular limitation.

For example, the graft copolymer (A-1) may have a grafting degree of 15 to 60 %, preferably 20 to 50 %, more preferably 25 to 45 % as calculated by Equation 1 below. Within this range, thin film processability may be improved. 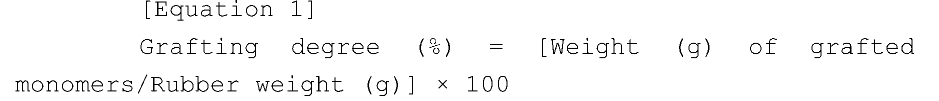 [Equation 1] Grafting degree (%) = [Weight (g) of grafted monomers/Rubber weight (g)] × 100

(In Equation 1, the weight (g) of grafted monomers is obtained by subtracting rubber weight (g) from the weight of insoluble substances (gel) obtained by dissolving the graft copolymer in acetone and performing centrifugation, and the rubber weight (g) is the weight (g) of rubber components theoretically added to graft copolymer powder.)

When the weight of insoluble substances (gel) is measured, 0.5 g of the powdered graft copolymer is added to 50 ml of acetone, followed by stirring at room temperature for 12 hours. Then, centrifugation is performed to separate insoluble substances that are not dissolved in acetone, followed by drying for 12 hours. Then, the weight of the insoluble substances (gel) is measured. The rubber weight (g) is the weight (g) of rubber components theoretically added to 0.5 g of the powdered graft copolymer.

As a specific measurement example, when measuring the weight (g) of insoluble substances (gel), 0.5 g of a powdered graft copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble substances that are not dissolved in acetone, followed by drying in a forced convection oven (equipment name: Lab companion OF-12GW) set to 85 °C for 12 hours via forced circulation. Then, the weight of the insoluble substances (gel) is measured.

In the present disclosure, thin film processability means that a sheet with a width of 1 m or more and a thickness of 0.2 mm or less can be produced with a length of 1000 m or more while maintaining a thickness deviation of within ±0.05 %.

For example, the alkyl acrylate of the present invention may be an alkyl acrylate containing an alkyl group having 1 to 15 carbon atoms, preferably may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably may be an alkyl acrylate containing an alkyl group having 1 to 4 or 8 carbon atoms, still more preferably may be butyl acrylate, ethylhexyl acrylate, or a mixture thereof, still more preferably may be butyl acrylate.

For example, the aromatic vinyl compound of the present invention may include one or more selected from the group consisting of styrene, α-methyl styrene, o-methyl styrene, ρ-methyl styrene, m-methyl styrene, ethyl styrene, isobutyl styrene, t-butyl styrene, o-bromo styrene, ρ-bromo styrene, m-bromo styrene, o-chloro styrene, ρ-chloro styrene, m-chloro styrene, vinyltoluene, vinylxylene, fluorostyrene, and vinylnaphthalene, preferably one or more selected from the group consisting of styrene and α-methyl styrene, more preferably styrene. In this case, due to appropriate fluidity, processability and mechanical properties such as impact resistance may be excellent.

For example, the vinyl cyanide compound of the present invention may include one or more selected from the group consisting of acrylonitrile, methacrylonitrile, phenylacrylonitrile, and α-chloroacrylonitrile, preferably acrylonitrile.

In the present disclosure, a polymer including a certain compound or monomer means a polymer prepared by polymerizing the compound or monomer, and a unit in the polymer is derived from the compound or monomer.

### (A-2) Alkyl acrylate-aromatic vinyl compound-vinyl cyanide compound graft copolymer containing an alkyl acrylate rubber having an average particle diameter of greater than 150 nm and 600 nm or less

For example, based on a total weight of components (A-1) to (D), the graft copolymer (A-2) may be included in an amount of 1 to 22 % by weight, preferably 3 to 17 % by weight, more preferably 4 to 13 % by weight, still more preferably 6 to 12 % by weight. Within this range, mechanical properties, processability, and transparency may be excellent.

The alkyl acrylate rubber of the graft copolymer (A-2) may have an average particle diameter of preferably 200 to 600 nm, more preferably 250 to 500 nm, still more preferably 300 to 470 nm, still more preferably 330 to 430 nm. Within this range, mechanical properties, such as impact strength, and processability may be excellent.

The graft copolymer (A-2) may preferably include an alkyl acrylate rubber (core) and an aromatic vinyl compound-vinyl cyanide compound copolymer (shell) surrounding the alkyl acrylate rubber. In this case, mechanical properties and processability may be excellent.

For example, based on a total weight thereof, the graft copolymer (A-2) may include 35 to 65 % by weight of an alkyl acrylate rubber, 20 to 55 % by weight of an aromatic vinyl compound, and 1 to 25 % by weight of a vinyl cyanide compound. Within this range, mechanical properties, such as impact strength, processability, and transparency may be excellent.

Preferably, the graft copolymer (A-2) may include 40 to 60 % by weight of an alkyl acrylate rubber, 25 to 50 % by weight of an aromatic vinyl compound, and 5 to 20 % by weight of a vinyl cyanide compound. Within this range, mechanical properties, such as impact strength, processability, and transparency may be excellent.

More preferably, the graft copolymer (A-2) may include 45 to 55 % by weight of an alkyl acrylate rubber, 33 to 43 % by weight of an aromatic vinyl compound, and 10 to 15 % by weight of a vinyl cyanide compound. Within this range, mechanical properties, such as impact strength, processability, and transparency may be excellent.

The types of the alkyl acrylate rubber, aromatic vinyl compound, and vinyl cyanide compound included in the graft copolymer (A-2) may be within the same category as the types of the alkyl acrylate rubber, aromatic vinyl compound, and vinyl cyanide compound included in the graft copolymer (A-1) of the present invention.

For example, the graft copolymer (A-2) may be prepared by emulsion polymerization. In this case, mechanical properties, such as impact strength, and transparency may be excellent.

The emulsion polymerization may be performed using an emulsion polymerization method, e.g., an emulsion graft polymerization method, commonly practiced in the art to which the present invention pertains, without particular limitation.

For example, the graft copolymer (A-2) may have a grafting degree of 40 to 120 %, preferably 45 to 100 %, more preferably 45 to 80 % as calculated by Equation 1. Within this range, mechanical properties, such as impact strength, and processability may be excellent.

For example, the difference in the average particle diameters between the graft copolymer (A-1) and the graft copolymer (A-2) may be 170 nm or more, preferably 190 nm or more, more preferably 210 nm or more, still more preferably 210 to 300 nm, still more preferably 210 to 270 nm. Within this range, mechanical properties, gloss, and whiteness may be excellent.

### (B) Aromatic vinyl compound-vinyl cyanide compound copolymer

For example, based on a total weight of components (A-1) to (D), the copolymer (B) may be included in an amount of 55 to 77 % by weight, preferably 50 to 72 % by weight, more preferably 55 to 67 % by weight, still more preferably 57 to 67 % by weight. Within this range, thin film processability, hiding power, and surface quality may be excellent.

For example, the aromatic vinyl compound-vinyl cyanide compound copolymer (B) may include one or more selected from the group consisting of an aromatic vinyl compound-vinyl cyanide compound copolymer (b-1) having a weight average molecular weight of 100,000 to 150,000 g/mol and an aromatic vinyl compound-vinyl cyanide compound copolymer (b-2) having a weight average molecular weight of greater than 150,000 g/mol and 200,000 g/mol or less, preferably the (b-2) copolymer, more preferably both of the copolymer (b-1) and copolymer (b-2). In this case, thin film processability, hiding power, and surface quality may be excellent.

When both the copolymer (b-1) and copolymer (b-2) are included, the copolymer (b-2) may be included in a larger amount than copolymer (b-1). Preferably, the weight ratio (b-1:b-2) of the copolymer (b-1) to the copolymer (b-2) may be 2:8 to 4:6, more preferably 2.5:7.5 to 3.5:6.5, still more preferably 2.7:7.3 to 3.3:6.7. Within this range, thin film processability, hiding power, and surface quality may be excellent.

For example, the difference in the weight average molecular weights between the copolymer (b-1) and the copolymer (b-2) may be 30,000 to 70,000 g/mol, preferably 35,000 to 65,000 g/mol, more preferably 40,000 to 60,000 g/mol. Within this range, thin film processability, hiding power, and surface quality may be excellent.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

The copolymer (b-1) may have a weight average molecular weight of preferably 110,000 to 140,000 g/mol, more preferably 110,000 to 130,000 g/mol. Within this range, mechanical properties, surface quality, and thin film processability may be excellent.

For example, based on a total weight thereof, the copolymer (b-1) may include 60 to 85 % by weight of an aromatic vinyl compound and 15 to 40 % by weight of a vinyl cyanide compound, preferably 65 to 80 % by weight of an aromatic vinyl compound and 20 to 35 % by weight of a vinyl cyanide compound, more preferably 72 to 80 % by weight of an aromatic vinyl compound and 20 to 28 % by weight of a vinyl cyanide compound. Within this range, mechanical properties, surface quality, and thin film processability may be excellent.

The copolymer (b-1) may be preferably a styrene-acrylonitrile copolymer (SAN resin), an α-methyl styrene-acrylonitrile copolymer (heat-resistant SAN resin), or a mixture thereof, more preferably a styrene-acrylonitrile copolymer (SAN resin). In this case, mechanical properties, surface quality, and thin film processability may be excellent.

The copolymer (b-2) may have a weight average molecular weight of preferably 160,000 to 190,000 g/mol, more preferably 160,000 to 180,000 g/mol. Within this range, mechanical properties, surface quality, and thin film processability may be excellent.

For example, based on a total weight thereof, the copolymer (b-2) may include 55 to 80 % by weight of an aromatic vinyl compound and 20 to 45 % by weight of a vinyl cyanide compound, preferably 60 to 75 % by weight of an aromatic vinyl compound and 25 to 40 % by weight of a vinyl cyanide compound, more preferably 63 to 71 % by weight of an aromatic vinyl compound and 29 to 37 % by weight of a vinyl cyanide compound. Within this range, mechanical properties, surface quality, and thin film processability may be excellent.

The copolymer (b-2) may be preferably a styrene-acrylonitrile copolymer (SAN resin), an α-methylstyrene-acrylonitrile copolymer (heat-resistant SAN resin), or a mixture thereof, more preferably a styrene-acrylonitrile copolymer (SAN resin). In this case, mechanical properties, surface quality, and thin film processability may be excellent.

The types of the aromatic vinyl compound and vinyl cyanide compound included in the aromatic vinyl compound-vinyl cyanide compound copolymer (B) may be within the same category as the types of the aromatic vinyl compound and vinyl cyanide compound included in the graft copolymer (A-1) of the present invention.

For example, the copolymer (B) may be prepared by solution polymerization, bulk polymerization, emulsion polymerization, or suspension polymerization, preferably bulk polymerization.

Solution polymerization, bulk polymerization, emulsion polymerization, and suspension polymerization commonly practiced in the art to which the present invention pertains may be used in the present invention without particular limitation.

### (C) White pigment

For example, based on a total weight of components (A-1) to (D), the white pigment (C) may be included in an amount of 7 to 12.5 % by weight, preferably 8 to 12 % by weight, more preferably 9 to 12 % by weight, still more preferably 10 to 11.5 % by weight. Within this range, high whiteness may be implemented with a small amount, impact resistance, thin film processability, hiding power, and surface quality may be excellent, and manufacturing costs may be reduced.

For example, the white pigment (C) may include one or more selected from the group consisting of titanium oxide (TiO₂), zinc oxide (ZnO), zinc sulfide (ZnS), lithopone, and white lead (lead oxide), preferably titanium oxide (TiO₂), zinc oxide (ZnO), or a mixture thereof, more preferably titanium oxide (TiO₂). In this case, high whiteness may be implemented with a small amount, impact resistance, thin film processability, hiding power, and surface quality may be excellent, and manufacturing costs may be reduced.

For example, the white pigment (C) may have an average particle size of 0.1 to 2 µm, preferably 0.2 to 1.5 µm, more preferably 0.4 to 1 µm, still more preferably 0.4 to 0.7 µm. In this case, high whiteness may be implemented with a small amount, impact resistance, thin film processability, hiding power, and surface quality may be excellent, and manufacturing costs may be reduced.

In the present disclosure, the average particle size may be measured by sedimentation particle size analysis using Stokes' law according to ASTM B761, and specifically, may be measured using SediGraph III Plus 5125 equipment.

For example, the white pigment (C) may have a refractive index of 2 to 3, preferably 2.2 to 2.9, more preferably 2.4 to 2.8, still more preferably 2.6 to 2.8. Within this range, hiding power and surface quality may be excellent.

In the present disclosure, the refractive index may be measured at room temperature using known methods, typically using an Abbe refractometer according to ASTM D542.

In the present disclosure, room temperature may be any point within the range of 20 ± 5 °C.

For example, the white pigment (C) may be a white pigment coated with a surface treatment agent, preferably a white pigment surface-coated with aluminum or silicon-aluminum. In this case, compatibility and dispersibility with a white pigment auxiliary agent may be improved, and thus hiding power and surface quality may be excellent.

For example, based on 100 % by weight of the surface-treated white pigment, the surface treatment agent may be included in an amount of 0 to 5 % by weight, preferably 0.1 to 4.5 % by weight, more preferably 1 to 4 % by weight, still more preferably 2 to 4 % by weight, still more preferably 3 to 4 % by weight. Within this range, compatibility with a white pigment auxiliary agent may be improved, and thus hiding power and surface quality may be excellent.

### (D) White pigment auxiliary agent having an average particle size of 2 µm or less

For example, based on a total weight of components (A-1) to (D), the white pigment auxiliary agent (D) having an average particle size of 2 µm or less may be included in an amount of 3.5 to 8 % by weight, preferably 3.5 to 7 % by weight, more preferably 4 to 6 % by weight, still more preferably 4.5 to 5.5 % by weight. Within this range, the excellent physical properties of conventional ASA-based resin may be maintained. In addition, since the synergy effect with a white pigment is expressed, high whiteness may be implemented even with a reduced input amount of the white pigment. In addition, thin film processability, hiding power, and gloss may be excellent, appearance quality may be excellent because no protrusions occur on the sheet surface, and manufacturing costs may be reduced.

For example, the white pigment auxiliary agent (D) may include one or more selected from the group consisting of calcium carbonate (CaCO₃), talc, clay, barium sulfate (BaSO₄), aluminum hydroxide (Al(OH)₃), and silicon dioxide (SiO₂), preferably calcium carbonate (CaCO₃). In this case, thin film processability, hiding power, and surface quality may be excellent, and manufacturing costs may be reduced.

The white pigment auxiliary agent (D) may have an average particle size of preferably 1.5 µm or less, more preferably 0.1 to 1.5 µm, still more preferably 0.3 to 1.3 µm, still more preferably 0.4 to 1.2 µm, still more preferably 0.5 to 1.1 µm, still more preferably 0.6 to 1.0 µm. Within this range, high whiteness may be implemented even with a reduced input amount of a white pigment, thin film processability, hiding power, and surface quality may be excellent, and manufacturing costs may be reduced.

For example, the white pigment auxiliary agent (D) may have a refractive index of 1.70 or less, preferably 1.0 to 1.70, more preferably 1.30 to 1.70, still more preferably 1.50 to 1.70. Within this range, hiding power and surface quality may be excellent.

The weight ratio (C:D) of the white pigment (C) to the white pigment auxiliary agent (D) may be preferably 1:0.4 to 1:0.7, more preferably 1:0.4 to 1:0.6. Within this range, high whiteness may be implemented even with a reduced input amount of a white pigment, thin film processability, hiding power, and surface quality may be excellent, and manufacturing costs may be reduced.

For example, based on a total weight of components (A-1) to (D), a total amount of the white pigment (C) and the white pigment auxiliary agent (D) may be 12 to 19 % by weight, preferably 13 to 18 % by weight, more preferably 14 to 17 % by weight. Within this range, high whiteness may be implemented even with a reduced input amount of a white pigment, thin film processability, hiding power, and surface quality may be excellent, and manufacturing costs may be reduced.

### Thermoplastic resin composition

When an "L" value and a "b" value are measured using a color difference meter in an SCI mode, and the difference (L value - b value), i.e., whiteness, between the "L" value and the "b" value is calculated, the thermoplastic resin composition may have a whiteness of preferably 95.5 or more, more preferably 95.5 to 99.5. Within this range, physical property balance may be excellent, and high whiteness may also be implemented.

In the present disclosure, whiteness (L value - b value) refers to L value and b value measured in SCI mode using a color difference meter on a specimen manufactured without adding pigment or dye such as blue colorant. As the whiteness (L value - b value) decreases, pigment or dye such as blue colorant is added in excessive amounts to achieve high whiteness, which reduces mechanical properties and durability.

The L value measured in SCI mode using a color difference meter is from 0 to 100. As the L value approaches 0, black appears. As the L value approaches 100, white appears. In the case of the b value, as the +b value increases, yellow appears. As the -b value increases, blue appears. In the case of white, there are a white color with high +b value and a white color with high -b value in the b value measured in SCI mode using a color difference meter, and as the b value approaches 0, it is more preferred in the market requiring luxurious feel.

When the +b value is measured in SCI mode using a color difference meter, the conventional ASA-based resin composition has a high +b value. Accordingly, a pigment or dye such as blue colorant is added to make the b value closer to 0. As the amount of pigment or dye added increases, the L value decreases, resulting in poor whiteness and reduced durability. Accordingly, as the whiteness calculated by the difference between the L value and the b value increases, luxurious high whiteness may be realized even when a small amount of pigment or dye such as blue colorant is used, and appearance quality may be excellent because no protrusions occur on the sheet surface.

In addition, in the present invention, by adding the white pigment auxiliary agent having an average particle size of 2 µm or less in combination with the white pigment, the excellent physical properties of conventional ASA-based resin may be maintained. In addition, the b value may be made close to 0 while maintaining the high L value of the thermoplastic resin composition.

The thermoplastic resin composition may have a gloss of preferably 82 or more, more preferably 84 or more, still more preferably 84 to 100 as measured at 60° for a sheet having a thickness of 0.15 mm according to ASTM D523. Within this range, physical property balance may be excellent, and luxurious appearance may be achieved.

The thermoplastic resin composition may have an Izod impact strength of preferably 5.3 kgf·cm/cm or more, more preferably 5.7 kgf·cm/cm or more, still more preferably 6.0 kgf·cm/cm or more, still more preferably 6.0 to 9.0 kgf·cm/cm as measured for notched injection-molded specimen (thickness: 1/4") according to ASTM D256. Within this range, physical property balance and mechanical properties may be excellent. In addition, due to excellent trimming properties, when cutting a sheet, the sheet may be cut in a desired direction and the cut surface thereof may be smooth.

The thermoplastic resin composition may have a melt index of preferably 7.5 g/10 min or more, more preferably 8.0 g/10 min or more, still more preferably 8.0 to 20 g/10 min, still more preferably 8.0 to 15 g/10 min as measured at 220 °C under a load of 10 kg according to ASTM D1238. Within this range, physical property balance, processability, and thin film processability may be excellent.

When observing a 0.8 m² area of the sheet surface by visual observation, the thermoplastic resin composition preferably does not produce protrusions. Thus, appearance quality may be excellent.

In the present disclosure, the sheet refers to a sheet, a film, or foil unless otherwise specified.

The thermoplastic resin composition preferably allows the production of a sheet having a width of 1 m or more, a thickness of 0.2 mm or less, and a length of 1000 m or more while maintaining a thickness deviation of ±0.05 %. Thus, thin film processability may be excellent.

Optionally, as needed, based on 100 parts by weight in total of components (A-1) to (D), the thermoplastic resin composition may include, for example, 0.001 to 20 parts by weight, 0.01 to 15 parts by weight, 0.05 to 10 parts by weight, 0.1 to 5 parts by weight, or 0.5 to 2 parts by weight of each of one or more selected from the group consisting of heat stabilizers, dyes, pigments (except white pigment), colorants, antistatic agents, antibacterial agents, processing aids, metal deactivators, flame retardants, flame suppressors, anti-dripping agents, anti-friction agents, and anti-wear agents. Within this range, the required physical properties may be realized without deteriorating the intrinsic properties of the thermoplastic resin composition of the present invention.

The heat stabilizer may preferably include a primary heat stabilizer and a secondary heat stabilizer.

For example, the primary heat stabilizer may be a phenolic heat stabilizer. Preferably, the primary heat stabilizer may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,l-dimethyl-2-{β-(3-t-butyl-4-hydroxy-5-methylphenyl)propionyloxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-di-t-butyl-4-hydroxyphenyl)propionic acid stearyl ester, more preferably octadecyl 3-(3,5-ditert-butyl-4-hydroxyphenyl)propanoate (IR1076).

For example, the secondary heat stabilizer may be a phosphorus-based heat stabilizer. Preferably, the secondary heat stabilizer may include one or more selected from the group consisting of bis(dialkylphenyl)pentaerythritol diphosphite ester, phosphite ester, trioctyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxyphenyl)butane diphosphite, tetra (C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl)phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyldibenz[d,f][1.3.2]-dioxa-phosphepin-6-yl}oxy]-N,N-bis[2-[{2,4,8,10-tetra-t-butyl-dibenz[d,f][1.3.2]-dioxaphosphepin-6-yl}oxy]ethyl]-ethanamine, and 6-[3-(3-t-butyl-4-hydroxy-5-methylphenyl)propoxy]-2,4,8,10-tetra-t-butyldibenz[d,f][1.3.2]-dioxaphosphepin, more preferably tris(2,4-di-tert-butylphenyl) phosphite (IF168).

Except for the heat stabilizer, the remaining dyes, etc. are not particularly limited as long as the dyes are dyes commonly used in the technical field to which the present invention belongs..

### Method of preparing thermoplastic resin composition

A method of preparing a thermoplastic resin composition of the present invention includes a step of kneading and extruding, at 200 to 300 °C and 100 to 500 rpm, 4 to 31 % by weight of an alkyl acrylate-aromatic vinyl compound-vinyl cyanide compound graft copolymer (A-1) containing an alkyl acrylate rubber having an average particle diameter of 50 to 150 nm; 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less; 55 to 77 % by weight of an aromatic vinyl compound-vinyl cyanide compound copolymer (B); 7 to 12.5 % by weight of a white pigment (C); and 3.5 to 8 % by weight of a white pigment auxiliary agent (D) having an average particle size of 2 µm or less. In this case, the excellent physical properties of conventional ASA-based resins may be obtained, high whiteness may be achieved even though the input amount of a white pigment is reduced, thin film processability, hiding power, and gloss may be excellent, appearance quality may be excellent because no protrusions occur on the sheet surface, and manufacturing costs may be reduced.

The method of preparing a thermoplastic resin composition shares all the technical features of the thermoplastic resin composition described above. Therefore, the description of the overlapping parts will be omitted..

The kneading and extrusion may be performed at preferably 200 to 300 °C, more preferably 210 to 270 °C, still more preferably 220 to 250 °C using an extruder. Within this range, stable extrusion is possible and the mixing effect is excellent. At this time, the temperature is temperature set in a cylinder.

For example, the kneading and extrusion may be performed at a screw rotation speed of 100 to 500 rpm, preferably 150 to 450 rpm, more preferably 200 to 400 rpm. In this case, process efficiency may be excellent due to the appropriate throughput per unit time.

For example, the thermoplastic resin composition obtained through extrusion may be manufactured into pellets using a pelletizer.

Any extruder commonly used in the technical field to which the present invention belongs may be used without any particular limitation. Preferably, a twin-screw extruder may be used.

### Molded article

A molded article of the present invention includes the thermoplastic resin composition. In this case, physical properties equal or superior to those of conventional ASA-based resins may be achieved, high whiteness may be achieved even though the input amount of a white pigment is reduced, thin film processability, hiding power, and gloss may be excellent, appearance quality may be excellent because no protrusions occur on the surface, and manufacturing costs may be reduced.

The molded article may preferably be a film, sheet, or foil, and specifically may be a decorative sheet for furniture finishing, a finishing material for outdoor building materials, a roofing finishing material, an interior film, a wallpaper, an edge band, a vinyl-coated metal (VCM), a flooring material, plastic-steel-plastic (PSP) for molding, or a film for wrapping.

A method of manufacturing the molded article may preferably include a step of kneading and extruding, at 200 to 300 °C and 100 to 500 rpm, 4 to 31 % by weight of an alkyl acrylate-aromatic vinyl compound-vinyl cyanide compound graft copolymer (A-1) containing an alkyl acrylate rubber having an average particle diameter of 50 to 150 nm; 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less; 55 to 77 % by weight of an aromatic vinyl compound-vinyl cyanide compound copolymer (B); 7 to 12.5 % by weight of a white pigment (C); and 3.5 to 8 % by weight of a white pigment auxiliary agent (D) having an average particle size of 2 µm or less to obtain an extruded product; and a step of manufacturing a molded article by molding the extruded product. In this case, the excellent physical properties of conventional ASA-based resin may be maintained, high whiteness may be achieved even though the input amount of a white pigment is reduced, thin film processability, hiding power, and gloss may be excellent, appearance quality may be excellent because no protrusions occur on the sheet surface, and manufacturing costs may be reduced.

For example, the extruded product may be in pellet or plate shape.

In the present disclosure, the plate shape is a plate shape commonly defined in the technical field to which the present invention belongs, but the present invention is not limited thereto. For example, the plate shape may include a flat shape, a sheet shape, a film shape, a foil shape, etc.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

The materials used in Examples and Comparative Examples below are as follows.
* (A-1) ASA graft copolymer containing an alkyl acrylate rubber having an average particle diameter of 50 to 150 nm: An ASA graft copolymer (rubber (core): 50 % by weight of butyl acrylate, shell: 37.5 % by weight of styrene and 12.5 % by weight of acrylonitrile, grafting degree: 35 %) prepared by emulsion polymerization and containing an alkyl acrylate rubber having an average particle diameter of 130 nm
* (A-2) ASA graft copolymer containing an alkyl acrylate rubber having an average particle diameter of greater than 150 nm and to 600 nm or less: An ASA graft copolymer (rubber (core): 50 % by weight of butyl acrylate, shell: 37.5 % by weight of styrene and 12.5 % by weight of acrylonitrile, grafting degree: 50 %) prepared by emulsion polymerization and containing an alkyl acrylate rubber having an average particle diameter of 350 nm
* (b-1) Aromatic vinyl compound-vinyl cyanide compound copolymer: An SAN resin (73 % by weight of styrene and 27 % by weight of acrylonitrile, Mw: 120,000 g/mol)
* (b-2) Aromatic vinyl compound-vinyl cyanide compound copolymer: An SAN resin (70 % by weight of styrene and 30 % by weight of acrylonitrile, Mw: 170,000 g/mol)
* (C) White pigment
   - (C-1) Aluminum-coated TiO₂ (96.6 % by weight of TiO₂ and 3.4 % by weight of an aluminum coating agent, average particle size: 0.46 µm, refractive index: 2.76)
   - (C-2) Aluminum-coated TiO₂ (97.0 % by weight of TiO₂ and 3.0 % by weight of an aluminum coating agent, average particle size: 0.49 µm, refractive index: 2.76)
   - (C-3) Silicon-aluminum-coated TiO2 (96.1 % by weight of TiO₂ and 3.9 % by weight of silicon-aluminum coating agent, average particle size: 0.52 µm, refractive index: 2.76)
* White pigment auxiliary agent (D)
   - (D-1) CaCO₃ (refractive index: 1.59) having an average particle size of 0.6 µm
   - (D-2) CaCO₃ (refractive index: 1.59) having an average particle size of 0.75 µm
   - (D-3) CaCO₃ (refractive index: 1.59) having an average particle size of 1.0 µm
   - (D-4) CaCO₃ (refractive index: 1.59) having an average particle size of 5.0 µm

### Examples 1 to 7 and Comparative Examples 1 to 9

According to the contents shown in Tables 1 and 2, the components shown in Tables 1 and 2 were introduced into a twin-screw extruder, and melt-kneading and extrusion were performed at 230 °C and 150 rpm to obtain pellets. The obtained pellets were injected at 230 °C to produce an injection specimen.

In addition, the pellets were extruded at 220 °C to produce a sheet with a thickness of 0.15 mm.

### [Test Examples]

The properties of the pellets, injection specimens, or sheets manufactured in Examples 1 to 7 and Comparative Examples 1 to 9 were measured by the following methods, and the results are shown in Tables 1 and 2 below.

### Measurement methods

* Melt index (g/10 min): Melt index was measured at 220 °C under a load of 10 kg according to ASTM D1238.
* Impact strength (kgf·cm/cm): Izod impact strength was measured for a notched injection-molded specimen (thickness: 1/4") according to ASTM D256.
* Gloss: Gloss was measured at 60° for a sheet having a thickness of 0.15 mm according to ASTM D523.
* Occurrence of protrusions: The occurrence of protrusions was visually confirmed over a range of 0.8 m² of the surface of an extruded sheet. When there are no protrusions, it is marked with an "X", and when there are protrusions, it is marked with a "∘".
* Whiteness (L value - b value): The L and b values were measured in SCI mode using a color difference meter for a thermoplastic resin composition that did not contain pigments or dyes such as blue colorant, and the whiteness was calculated from the difference between these values (L value - b value). As whiteness (L value - b value) increases, high whiteness is exhibited.

**[Table 1]**

| Classification (wt%) | Examples | | | | | | |
|---|---|---|---|---|---|---|---|
| | 1 | 2 | 3 | 4 | 5 | 6 | 7 |
| (A-1) ASA | 6 | 17 | 6 | 6 | 25 | 17 | 8 |
| (A-2) ASA | 12 | 9 | 12 | 12 | 4 | 8 | 13 |
| (b-1) SAN | | 17 | | | 18 | 17 | 21 |
| (b-2) SAN | 67 | 42 | 67 | 67 | 37 | 42 | 42 |
| (C-1) TiO₂ | 2.5 | 4 | 6 | 5 | 8 | 3 | 2 |
| (C-2) TiO₂ | 6 | 3 | 3 | 2.5 | 3 | 0.5 | 6 |
| (C-3) TiO₂ | 1.5 | 3 | 1 | 2.5 | | 7.5 | 3 |
| (D-1) CaCO₃ | | | | 5 | | | |
| (D-2) CaCO₃ | 5 | | | | | | |
| (D-3) CaCO₃ | | 5 | 5 | | 5 | 5 | 5 |
| (D-4) CaCO₃ | | | | | | | |

| Physical properties | | | | | | | |
|---|---|---|---|---|---|---|---|
| Melt index (g/10 min) | 8.0 | 10.9 | 8.0 | 7.7 | 9.1 | 8.2 | 16.5 |
| Impact strength (kgf·cm/cm) | 6.2 | 6.3 | 5.5 | 6.7 | 5.4 | 6.1 | 5.7 |
| Gloss | 88.5 | 86.2 | 83.1 | 93.2 | 85.3 | 86.8 | 83.0 |
| Occurrence of protrusions | X | X | X | X | X | X | X |
| Whiteness (L value-b value) | 95.6 | 95.6 | 95.5 | 95.7 | 95.6 | 95.9 | 95.5 |

**[Table 2]**

| Classificatio n (wt%) | Comparative Examples | | | | | | | | |
|---|---|---|---|---|---|---|---|---|---|
| | 1 | 2 | 3 | 4 | 5 | 6 | 7 | 8 | 9 |
| (A-1) ASA | 6 | 17 | 25 | 18 | 16 | 15 | 38 | 1 | 17 |
| (A-2) ASA | 12 | 8 | 4 | 9 | 8 | 8 | 4 | 31 | 8 |
| (b-1) SAN | | 17 | 18 | 18 | 16 | 15 | 42.5 | 53 | 17 |
| (b-2) SAN | 67 | 42 | 37 | 46 | 40.5 | 38 | | | 41 |
| (C-1) TiO₂ | 15 | 8 | 2 | 3 | 3.3 | 4 | 3.5 | 1.5 | 4 |
| (C-2) TiO₂ | | 3 | 7 | | 8 | 4 | 3.5 | 2.5 | 3 |
| (C-3) TiO₂ | | | 7 | | 3.2 | 2 | 3.5 | 6 | 8 |
| (D-1) CaCO₃ | | | | | | | | | |
| (D-2) CaCO₃ | | | | | | | | | |
| (D-3) CaCO₃ | | | | 6 | 5 | 14 | 5 | 5 | 2 |
| (D-4) CaCO₃ | | 5 | | | | | | | |

| Physical properties | | | | | | | | | |
|---|---|---|---|---|---|---|---|---|---|
| Melt index (g/10 min) | 9.4 | 10.1 | 7.6 | 11.9 | 9.8 | 8.6 | 18.1 | 23.2 | 9.6 |
| Impact strength (kgf·cm/cm) | 8.0 | 5.0 | 4.7 | 9.0 | 3.2 | 2.5 | 16.7 | 36.6 | 6.7 |
| Gloss | 94.4 | 79.9 | 97.6 | 85.2 | 84.7 | 68.2 | 75.9 | 50. 75.6 | 90.7 |
| Occurrence of protrusions | X | ○ | X | X | X | X | X | X | X |
| Whiteness (L value-b value) | 95.5 | 95.1 | 95.7 | 90.4 | 95.7 | 95.0 | 94.6 | 93.7 | 94.4 |

As shown in Tables 1 and 2, in the case of the thermoplastic resin compositions of Examples 1 to 7 according to the present invention, compared to Comparative Examples 1 to 9, despite the decrease in TiO₂ (C) content, melt index and processability were excellent, and Izod impact strength was 5.3 kgf·cm/cm or more. In addition, due to excellent trimming properties, when cutting a sheet, the sheet was cut in a desired direction and the cut surface thereof was smooth. In addition, no protrusions occurred on the surface of the sheet. In addition, due to excellent gloss, surface quality was excellent, high whiteness was implemented, and manufacturing costs were reduced.

On the other hand, in the case of Comparative Example 1 in which an excess of TiO₂ (C) was added and the white pigment auxiliary agent (D) was not added, although Comparative Example 1 used a larger amount of TiO₂ (C) than Examples 1 to 7, Comparative Example 1 exhibited whiteness similar to Examples 1 to 7.

In addition, in the case of Comparative Example 2 in which CaCO₃ (D-4) having an average particle size outside of the range of the present invention was used as the white pigment auxiliary agent (D), protrusions occurred on the surface of a sheet, and thus surface quality was poor and whiteness (L value - b value) was low.

In addition, in the case of Comparative Example 3 in which an excess of TiO₂ (C) was added and the white pigment auxiliary agent (D) was not added, due to low impact strength, trimming properties were poor. In addition, the whiteness of Examples was achieved by adding an excessive amount of expensive TiO₂, which significantly increased manufacturing costs.

In addition, in the case of Comparative Example 4 in which a small amount of TiO₂ (C) was included, since the whiteness (L value - b value) was poor, it was found that a large amount of pigment or dye such as blue colorant was used to implement high whiteness.

In addition, in the case of Comparative Example 5 including an excess of TiO₂ (C) and Comparative Example 6 including an excess of CaCO₃ (D-3), due to low impact strength, trimming properties were poor. In particular, in Comparative Example 6, the gloss was also reduced.

In addition, in the case of Comparative Examples 7 and 8 in which the contents of the graft copolymer (A-1) and copolymer (B), or the content of the graft copolymer (A-2) were outside the range of the present invention, gloss and whiteness (L value - b value) were poor.

In addition, in the case of Comparative Example 9 in which an excess of TiO₂ (C) and a small amount of CaCO₃ (D) were included, whiteness (L value - b value) was poor.

In conclusion, when a white pigment and a white pigment auxiliary agent having a predetermined average particle size are added to a base resin consisting of two types of alkyl acrylate-aromatic vinyl compound-vinyl cyanide compound graft copolymers containing an alkyl acrylate rubber having a predetermined average particle diameter according to the present invention and an aromatic vinyl compound-vinyl cyanide compound copolymer, the excellent physical properties of conventional ASA-based resins may be maintained, high whiteness may be achieved even though the input amount of the white pigment is reduced, thin film processability, hiding power, and gloss may be excellent, appearance quality may be excellent because no protrusions occur on the sheet surface, and manufacturing costs may be reduced.

## Claims

1. A thermoplastic resin composition, comprising:
4 to 31 % by weight of an alkyl acrylate-aromatic vinyl compound-vinyl cyanide compound graft copolymer (A-1) containing an alkyl acrylate rubber having an average particle diameter of 50 to 150 nm;
1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less;
55 to 77 % by weight of an aromatic vinyl compound-vinyl cyanide compound copolymer (B);
7 to 12.5 % by weight of a white pigment (C); and
3.5 to 8 % by weight of a white pigment auxiliary agent (D) having an average particle size of 2 µm or less.

2. The thermoplastic resin composition according to claim 1, wherein the white pigment (C) comprises one or more selected from the group consisting of titanium oxide (TiO₂), zinc oxide (ZnO), zinc sulfide (ZnS), lithopone, and white lead (lead oxide).

3. The thermoplastic resin composition according to claim 1, wherein the white pigment auxiliary agent (D) comprises one or more selected from the group consisting of calcium carbonate (CaCO₃), talc, clay, barium sulfate (BaSO₄), aluminum hydroxide (Al(OH)₃), and silicon dioxide (SiO₂).

4. The thermoplastic resin composition according to claim 1, wherein the white pigment auxiliary agent (D) has a refractive index of 1.70 or less.

5. The thermoplastic resin composition according to claim 1, wherein a weight ratio (C:D) of the white pigment (C) to the white pigment auxiliary agent (D) is 1:0.4 to 1:0.7.

6. The thermoplastic resin composition according to claim 1, wherein, based on a total weight of the graft copolymer (A-1), the graft copolymer (A-1) comprises 35 to 65 % by weight of an alkyl acrylate rubber, 20 to 55 % by weight of an aromatic vinyl compound, and 1 to 25 % by weight of a vinyl cyanide compound.

7. The thermoplastic resin composition according to claim 1, wherein, based on a total weight of the graft copolymer (A-2), the graft copolymer (A-2) comprises 35 to 65 % by weight of an alkyl acrylate rubber, 20 to 55 % by weight of an aromatic vinyl compound, and 1 to 25 % by weight of a vinyl cyanide compound.

8. The thermoplastic resin composition according to claim 1, wherein the aromatic vinyl compound-vinyl cyanide compound copolymer (B) comprises one or more selected from the group consisting of an aromatic vinyl compound-vinyl cyanide compound copolymer (b-1) having a weight average molecular weight of 100,000 to 150,000 g/mol and an aromatic vinyl compound-vinyl cyanide compound copolymer (b-2) having a weight average molecular weight of greater than 150,000 g/mol and 200,000 g/mol or less.

9. The thermoplastic resin composition according to claim 8, wherein the thermoplastic resin composition comprises both the aromatic vinyl compound-vinyl cyanide compound copolymer (b-1) having a weight average molecular weight of 100,000 to 150,000 g/mol and the aromatic vinyl compound-vinyl cyanide compound copolymer (b-2) having a weight average molecular weight of greater than 150,000 g/mol and 200,000 g/mol or less, wherein a weight ratio (b-1:b-2) thereof is 2:8 to 4:6.

10. The thermoplastic resin composition according to claim 1, wherein, when an "L" value and a "b" value are measured in an SCI mode using a color difference meter and a difference thereof is calculated to obtain whiteness (L value - b value), the thermoplastic resin composition has a whiteness of 95.5 or more.

11. The thermoplastic resin composition according to claim 1, wherein the thermoplastic resin composition has a gloss of 82 or more as measured at 60° for a sheet having a thickness of 0.15 mm according to ASTM D523.

12. The thermoplastic resin composition according to claim 1, wherein the thermoplastic resin composition has an Izod impact strength of 5.3 kgf·cm/cm or more as measured for a notched injection-molded specimen (thickness: 1/4") according to ASTM D256.

13. A method of preparing a thermoplastic resin composition, comprising kneading and extruding, at 200 to 300 °C and 100 to 500 rpm, 4 to 31 % by weight of an alkyl acrylate-aromatic vinyl compound-vinyl cyanide compound graft copolymer (A-1) containing an alkyl acrylate rubber having an average particle diameter of 50 to 150 nm; 1 to 22 % by weight of an alkyl acrylate-aromatic vinyl compound-vinyl cyanide compound graft copolymer (A-2) containing an alkyl acrylate rubber having an average particle diameter of greater than 150 nm and 600 nm or less; 55 to 77 % by weight of an aromatic vinyl compound-vinyl cyanide compound copolymer (B); 7 to 12.5 % by weight of a white pigment (C); and 3.5 to 8 % by weight of a white pigment auxiliary agent (D) having an average particle size of 2 µm or less.

14. A molded article comprising the thermoplastic resin composition according to any one of claims 1 to 12.
